(19) Europäisches Patentamt
European Patent Office
Office européen des brevets

(11) EP 3 413 386 A1

(12) EUROPEAN PATENT APPLICATION
published in accordance with Art. 153(4) EPC

(43) Date of publication:
**12.12.2018 Bulletin 2018/50**

(21) Application number: **17747749.4**

(22) Date of filing: **02.02.2017**

(51) Int Cl.:
***H01M 8/18*** *(2006.01)* ***H01M 12/08*** *(2006.01)*
***H01M 10/36*** *(2010.01)*

(86) International application number:
**PCT/KR2017/001144**

(87) International publication number:
**WO 2017/135704 (10.08.2017 Gazette 2017/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.02.2016 KR 20160013064**

(71) Applicants:
- **Lotte Chemical Corporation**
  **Seoul, 05551 (KR)**
- **Sungshin Women's University Industry Academic Cooperation Foundation**
  **Seongbuk-gu, Seoul 02844 (KR)**

(72) Inventors:
- **CHO, Hwa Yeon**
  **Daejeon 34127 (KR)**
- **PARK, Sun A**
  **Incheon 21312 (KR)**
- **KIM, Se Jin**
  **Daejeon 35359 (KR)**
- **PARK, Sang Sun**
  **Seoul 04395 (KR)**
- **JANG, Wooin**
  **Daejeon 35355 (KR)**
- **KANG, Taehyuk**
  **Seoul 01314 (KR)**
- **KIM, Dae Sik**
  **Daejeon 35367 (KR)**
- **SHIN, Dong Myung**
  **Daejeon 34118 (KR)**
- **CHAE, Jung Hyun**
  **Seoul 01133 (KR)**
- **KIM, Hyun Joo**
  **Uiwang-si**
  **Gyeonggi-do 16057 (KR)**

(74) Representative: **Agasse, Stéphane et al**
**Cabinet GERMAIN & MAUREAU**
**B.P. 6153**
**69466 Lyon Cedex 06 (FR)**

# (54) REDOX FLOW BATTERY ELECTROLYTE AND REDOX FLOW BATTERY

(57) The present invention relates to a redox flow battery electrolyte including: an additive mixture including a zinc/bromine (Zn/Br) redox couple; a quaternary ammonium bromide containing at least one alkylene alkoxy group; and water, and to a zinc/bromine (Zn/Br) redox flow battery including the same.



Printed by Jouve, 75001 PARIS (FR)

## Description

### [TECHNICAL FIELD]

CROSS-REFERENCE TO RELATED APPLICATION

This application claims priority to and the benefits of Korean Patent Application No. 10-2016-0013064 filed with the Korean Intellectual Property Office on February 2, 2016, the disclosure of which is incorporated herein by reference in its entirety.

The present invention relates to a redox flow battery electrolyte and a redox flow battery.

### [BACKGROUND ART]

Existing power generation systems, such as with thermal power generation emitting a large amount of greenhouse gases and environmental pollutants by using fossil fuels, and with nuclear power plants entailing their stability issues and hazardous waste processing, have come to various destined breaking points. In response thereto, research efforts have increased significantly to develop environmentally friendlier, higher efficiency energy sources and a power supply system using the same.

In particular, power storage technology has been the focus of research and development activities for broadening the usability of renewable energy sources against their significant susceptibility to external conditions and for enhancing the efficiency of power utilization, wherein secondary batteries receive more intensive interest and their research and development efforts are actively made.

A chemical flow battery refers to an oxidation/reduction cell capable of converting chemical energy of an active substance directly into electrical energy, and it represents an energy storage system adapted to store new and renewable energy with wild output variations according to environmental conditions such as sunlight and wind, and to convert the same into high-quality power. Specifically, the chemical flow battery has electrolytes containing an active material that causes an oxidation/reduction reaction, and that circulates between an electrode and a storage tank, to perform charging and discharging.

Such a chemical flow battery typically includes a tank containing active materials in different oxidation states, a pump for circulating the active materials during charge/discharge, and unit cells partitioned by a separation membrane, wherein each unit cell includes electrodes, an electrolyte, a current collector, and a separation membrane.

Specific examples of the chemical flow battery include a redox flow battery using zinc/bromine (Zn/Br) or the like as a redox-couple.

The positive electrode electrolyte (cathode electrolyte) of the redox flow battery is subjected to an oxidation/reduction reaction on the positive electrode (cathode) side to generate an electric current, which is stored in the cathode electrolyte tank. The negative electrode electrolyte (anode electrolyte) is subjected to an oxidation/reduction reaction on the negative electrode (anode) side to generate an electric current, which is stored in the anode electrolyte tank.

Specifically, during charging of the redox flow battery, the following chemical reaction occurs between the separation membrane and the cathode:

$$2Br^- \rightarrow Br_2 + 2e^- \text{ (Equation 1)}$$

and bromine contained in the cathode electrolyte is produced and stored in the cathode electrolyte tank.

Also, during charging of the redox flow battery, the following chemical reaction occurs between the separation membrane and the anode:

$$Zn^{2+} + 2e^- \rightarrow Zn \text{ (Equation 2)}$$

and zinc contained in the anode electrolyte is deposited on the anode electrolyte and stored.

Liquid bromine generated on the cathode side has low solubility in water and low vapor pressure, and has a property of easy vaporizing, so it is easily changed into bromine gas. Alternatively, the liquid bromine crosses over to the anode side and reacts with Zn to cause self-discharge. Due to loss of bromine gas and crossover of the liquid bromine to the anode side, a loss occurs in which the amount of charge is reduced.

In order to prevent such self-discharge or loss, complex compounds containing bromine have been used. The complex compound containing bromine may form a complex with bromine, thereby increasing the solubility of gaseous bromine, lowering the generation of gaseous bromine, and reducing the amount of bromine crossover.

As a bromine complex, 1-ethyl-1-methylpyrrolidinium bromide (abbreviated as MEP-Br) is widely used. In the MEP-Br, bromine forms a complex compound, thereby lowering the amount of charge and increasing the coulombic efficiency. However, due to formation of the complex compound, the viscosity of the electrolyte is increased and the flowability is lowered, and thereby there is a limitation that the voltage efficiency is lowered.

In addition, a method of using, as a bromine complex, a compound in which an alkyl group has been introduced into pyridinium bromide has been proposed. However, such a bromine complex compound has a problem that, during formation of a bromine complex compound, the solubility thereof is decreased and the flowability is lowered. As a result, there was a limitation that both the voltage efficiency and the coulombic efficiency of the redox flow battery are lowered.

Further, a method of using, as a bromine complex, a substance in which an alkyl group is introduced in the imidazolium halide series has been proposed, and it exhibited improved conductivity compared to MEP-Br, but there was a limitation that its electrochemical property is not good, the discharge efficiency greatly decreases, and the coulombic efficiency decreases.

[PRIOR ART LITERATURE]

[PATENT LITERATURE]

(Patent Literature 1) International Publication WO2013-168145 (published on November 14, 2013)

## [DETAILED DESCRIPTION OF THE INVENTION]

### [TECHNICAL PROBLEM]

It is an object of the present invention to provide a redox flow battery electrolyte which can minimize the generation of bromine gas during charging, prevent self-discharge due to bromine, and enable redox flow batteries to achieve higher energy efficiency, current efficiency, and voltage efficiency.

It is another object of the present invention to provide a redox flow battery using the above-described redox flow battery electrolyte.

### [TECHNICAL SOLUTION]

The present disclosure provides a redox flow battery electrolyte including an additive mixture including: a zinc/bromine (Zn/Br) redox couple; a quaternary ammonium bromide containing at least one alkylene alkoxy group; and water.

The present disclosure also provides a redox flow battery using the above-described electrolyte.

Hereinafter, a redox flow battery electrolyte and a redox flow battery according to a specific embodiment of the present invention will be described in detail.

As described above, according to an embodiment of the invention, a redox flow battery electrolyte including an additive mixture including a zinc/bromine (Zn/Br) redox couple, a quaternary ammonium bromide containing at least one alkylene alkoxy group, and water may be provided.

The present inventors found through experiments that when adding the above-described quaternary ammonium bromide containing at least one alkylene alkoxy group to the redox flow battery electrolyte, it can minimize the generation of bromine gas during charging, prevent self-discharge due to bromine, and enable redox flow batteries to achieve higher energy efficiency, current efficiency, and voltage efficiency, thereby completing the invention.

Specifically, the quaternary ammonium bromide containing at least one alkylene alkoxy group described above can increase the degree of combination with a bromine gas while greatly increasing the solubility of the components contained in the redox flow battery electrolyte due to its structural characteristics. Accordingly, the redox flow battery electrolyte including the quaternary ammonium bromide containing at least one alkylene alkoxy group can minimize the generation of bromine gas during charging, prevent self-discharge due to bromine, and further enable redox flow batteries to achieve higher energy efficiency, current efficiency, and voltage efficiency during operation of the battery.

More specifically, the at least one alkylene alkoxy group is a functional group in which an alkylene group having 1 to 10 carbon atoms and an alkoxy group having 1 to 10 carbon atoms are bonded, wherein the alkylene group having 1 to 10 carbon atoms may be bonded to the quaternary ammonium bromide.

The quaternary ammonium bromide containing at least one alkylene alkoxy group may be one compound selected from the group consisting of the following Chemical Formulas 1 to 8 or a mixture of two or more thereof.

<Chemical Formula 1>

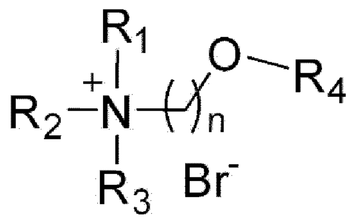

In Chemical Formula 1, $R_1$, $R_2$, $R_3$, and $R_4$ are each independently an alkyl or arylalkyl having 1 to 10 carbon atoms, and n is an integer of 1 to 5.

<Chemical Formula 2>

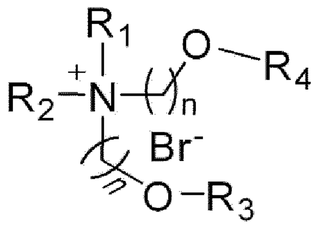

In Chemical Formula 2 $R_1$, $R_2$, $R_3$, and $R_4$ are each independently an alkyl or arylalkyl having 1 to 10 carbon atoms, and n is an integer of 1 to 5.

<Chemical Formula 3>

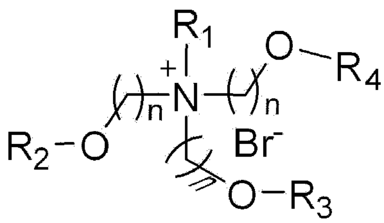

In Chemical Formula 3, $R_1$, $R_2$, $R_3$, and $R_4$ are each independently an alkyl or arylalkyl having 1 to 10 carbon atoms, and n is an integer of 1 to 5.

<Chemical Formula 4>

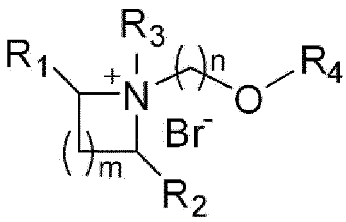

In Chemical Formula 4, $R_1$ and $R_2$ are each independently hydrogen or an alkyl or arylalkyl having 1 to 10 carbon atoms, $R_3$ and $R_4$ are each independently an alkyl or arylalkyl having 1 to 10 carbon atoms, n is an integer of 1 to 5, and m is an integer of 0 to 7.

<Chemical Formula 5>

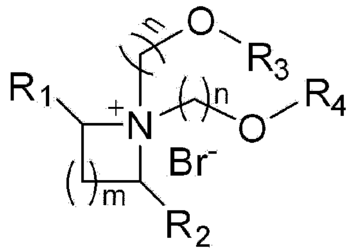

In Chemical Formula 5, $R_1$ and $R_2$ are each independently hydrogen or an alkyl or arylalkyl having 1 to 10 carbon atoms, $R_3$ and $R_4$ are each independently an alkyl or arylalkyl having 1 to 10 carbon atoms, n is an integer of 1 to 5, and m is an integer of 0 to 7.

<Chemical Formula 6>

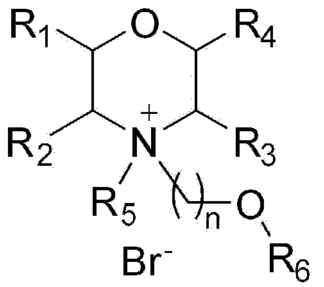

In Chemical Formula 6, $R_1$, $R_2$, $R_3$, and $R_4$ are each independently hydrogen or an alkyl or arylalkyl having 1 to 10 carbon atoms,
$R_5$ and $R_6$ are each independently an alkyl or arylalkyl having 1 to 10 carbon atoms, and n is an integer of 1 to 5.

<Chemical Formula 7>

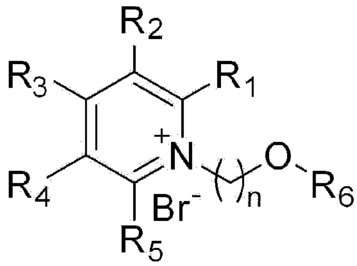

In Chemical Formula 7, $R_1$, $R_2$, $R_3$, $R_4$, and $R_5$ are each independently hydrogen or an alkyl or arylalkyl having 1 to 10 carbon atoms, $R_6$ is an alkyl or arylalkyl having 1 to 10 carbon atoms, and n is an integer of 1 to 5.

<Chemical Formula 8>

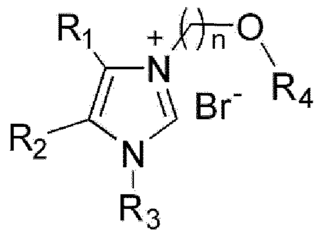

In Chemical Formula 8, $R_1$, $R_2$ and $R_3$ are each independently hydrogen or an alkyl or arylalkyl having 1 to 10 carbon atoms, each $R_4$ is an alkyl or arylalkyl having 1 to 10 carbon atoms, and n is an integer of 1 to 5.

Further, the concentration of the quaternary ammonium bromide containing at least one alkylene alkoxy group in the redox flow battery electrolyte may be 0.1 M to 2.0 M. If the concentration of the quaternary ammonium bromide containing at least one alkylene alkoxy group in the redox flow battery electrolyte is too low, the above-mentioned effects, for example, the effects of minimizing the generation of bromine gas during charging, and preventing self-discharge due to bromine, may not be substantially exhibited. In addition, there may be no significant change in the energy efficiency, current efficiency, and voltage efficiency exhibited by a redox flow battery including the redox flow battery electrolyte.

If the concentration of the quaternary ammonium bromide containing at least one alkylene alkoxy group in the redox flow battery electrolyte exceeds 2.0 M, the solubility of the components contained in the redox flow battery electrolyte may be rather reduced, or the conductivity of the electrolyte may be decreased, the quaternary ammonium bromide containing at least one alkylene alkoxy group may be precipitated, or the voltage efficiency of a redox flow battery including the above-described electrolyte may be greatly reduced.

As described above, the redox flow battery electrolyte of the embodiment may include a zinc/bromine (Zn/Br) redox couple. Specifically, the concentration of the zinc/bromine (Zn/Br) redox couple in the electrolyte may be 0.2 M to 10 M.

The redox flow battery electrolyte of the embodiment may include at least one of $ZnBr_2$, $ZnCl_2$, and pure bromine, which is a starting material of the electrolyte, in addition to the additive mixture described above.

In addition, the redox flow battery electrolyte of the embodiment may further include a surfactant, an additional complexing agent, a conductive agent, or other additives in addition to the additive mixture described above.

Specifically, the redox flow battery electrolyte of the embodiment may further include at least one complexing agent selected from the group consisting of pyridinium bromide substituted with at least one alkyl group having 1 to 10 carbon atoms, imidazolium bromide substituted with at least one alkyl group having 1 to 10 carbon atoms, and 1-ethyl-1-methylpyrrolidinium bromide.

When the complexing agent is further included as described above, the concentration ratio between the quaternary ammonium bromide containing at least one alkylene alkoxy group and the complexing agent in the redox flow battery electrolyte of the embodiment may be 1: 10 to 10:1, or 1:1 to 1:5.

The redox flow battery electrolyte of the embodiment may further include a conductive agent for improving conductivity. The conductive agent may include a potassium salt compound. Specifically, it may be a compound containing potassium such as KCl, $KNO_3$, KBr, and $KMnO_4$.

The concentration of the conductive agent in the redox flow battery electrolyte may be 0.1 M to 5.0 M. If the concentration of the conductive agent in the redox flow battery electrolyte exceeds 5.0 M, the solubility of the components contained in the redox flow battery electrolyte may decrease or precipitation of the conductive agent may occur, the conductivity of the redox flow battery electrolyte may be reduced, and the voltage efficiency and the coulombic efficiency of the redox flow cell using the electrolyte may be greatly reduced.

In addition, the redox flow battery electrolyte of the embodiment may further include a pH adjusting agent, and examples thereof may include sulfuric acid or a salt thereof, hydrochloric acid or a salt thereof, bromic acid, aspartic acid, or the like.

The redox flow battery electrolyte may have a conductivity of at least 50 mS/cm or more.

On the other hand, according to another embodiment of the invention, a redox flow battery using the redox flow battery electrolyte may be provided.

A specific example of the redox flow battery is not limited, and preferably, the redox flow battery may be a zinc/halogen redox flow battery.

More specifically, the redox flow battery may use a zinc/bromine (Zn/Br) redox couple, and the concentration of the zinc/bromine (Zn/Br) redox couple in the electrolyte of the redox flow battery may be 0.2 M to 10 M.

The redox flow battery may have a conventionally known structure. For example, the redox flow battery may include a unit cell including a separation membrane and an electrode, a tank containing active materials in different oxidation states, and a pump for circulating the active materials between the unit cell and the tank during charge/discharge.

The redox flow battery may include a module including one or more of the unit cells.

The redox flow battery may include a flow frame. The flow frame not only serves as a movement path of the electrolyte, but also provides uniform distribution of the electrolyte between the electrode and the separation membrane so that the electrochemical reaction of the actual battery can be performed well. The flow frame may have a thickness of 0.1 mm to 10.0 mm, and it may be composed of a polymer such as polyethylene, polypropylene, or polyvinyl chloride.

## [ADVANTAGEOUS EFFECTS]

According to the present invention, a redox flow battery electrolyte which can minimize the generation of bromine gas during charging, prevent self-discharge due to bromine, and enable redox flow batteries to achieve higher energy

efficiency, current efficiency, and voltage efficiency, and a redox flow battery using the redox flow battery electrolyte, may be provided.

## [DETAILED DESCRIPTION OF THE EMBODIMENTS]

Hereinafter, the present invention will be described in more detail with reference to examples. However, these examples are presented only to illustrate the invention, and the scope of the present invention is not limited thereto.

### [Preparation Example: Preparation of redox flow battery electrolyte and zinc-bromine redox flow battery]

A cathode, a flow frame, a separation membrane, a flow frame, and an anode were assembled in this order using the components shown in Table 1 below to prepare a zinc-bromine redox flow battery.

[Table 1] Preparation of zinc-bromine redox flow battery

| Class | | Content |
|---|---|---|
| Separation membrane | | ASAHI SF600 |
| Electrode | Anode material | Graphite plate |
| | Cathode material | Activated carbon coated graphite plate |
| Area ($cm^2$) | | 35 (7 cm x 5 cm) |
| Flow frame (frame material) | | PTFE (thickness of 1.5 mm) |
| Gasket | | PVC |
| Electrolyte (ml) | Anolyte 30 ml | 2.25 M $ZnBr_2$ + 0.55 M $ZnCl_2$ + bromine complexing agent + Pure $Br_2$ 0.035 M |
| | Catholyte 30 ml | |
| Flow Rate (ml/min) | | 140 |
| Operation temperature | | Room temperature |
| * Specific concentrations and components of a bromine complexing agent are shown in Table 2 below.<br>* The electrolyte of the following examples further includes 1 M of conductive agent KCl. | | |

### [Examples and Comparative Examples: Preparation of redox flow battery electrolyte]

The bromine complexing agent shown in Table 2 below was mixed with the electrolyte components in the electrolyte of Table 1 to prepare a redox flow battery electrolyte.

[Table 2]

| Class | Type of bromine complexing agent | Concentration | Class | Type of bromine complexing agent | Concentration [M] |
|---|---|---|---|---|---|
| Comparative Example 1 | 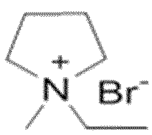 | 0.8 | Examp le 5 | 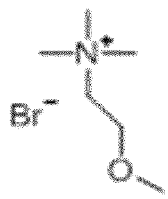 | 0.2 |
| Comparative Example 2 | 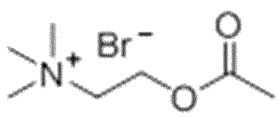 | 0.8 | | 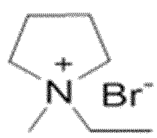 | 0.6 |

(continued)

| Class | Type of bromine complexing agent | Concentration | Class | Type of bromine complexing agent | Concentration [M] |
|---|---|---|---|---|---|
| Example 1 | 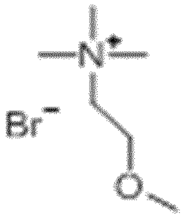 | 0.8 | Examp le 6 | 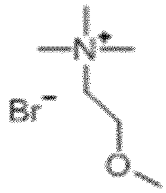 | 0.25 |
| Example 2 | 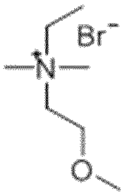 | 0.8 | | 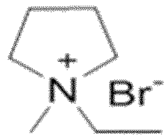 | 0.55 |
| Example 3 | 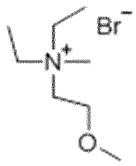 | 0.8 | Examp le 7 | 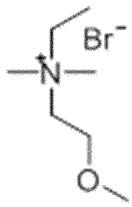 | 0.8 |
| Example 4 | 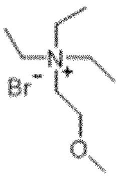 | 0.8 | Examp le 8 | 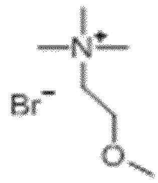 | 0.25 |
| | | | | 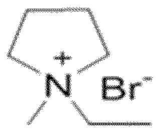 | 0.55 |

**[Experimental Example 1: Evaluation of operation performance of redox flow battery electrolyte]**

The electrolytes of the examples and comparative examples described above were added to the redox flow battery of Table 1, respectively, and charge and discharge cycles were performed ten times to measure the energy efficiency, coulombic efficiency, and voltage efficiency.

In the following experimental examples, the energy efficiency, voltage efficiency, and coulombic efficiency of the zinc-bromine redox flow battery were measured by the following method.

(1) Energy Efficiency (EE)

= (Discharge energy (Wh)/Charge energy (Wh)) *100

(2) Voltage Efficiency (VE)

= (Energy efficiency/Coulombic efficiency)*100

(3) Coulombic Efficiency (CE)

= (Discharge capacity (Ah)/Charge capacity (Ah))*100

**<Condition of Experimental Example 1>**

- Charging condition: current density 20 mA/$cm^2$, charge amount 83 mAh/$cm^2$
- Discharging condition: 20 mA/$cm^2$, cut-off 0.01 V
- Discharging condition: 20 mA/$cm^2$, cut-off 0.01 V

[Table 3] Operation result of Experimental Example 1

| | Efficiency [%] | | |
|---|---|---|---|
| | EE | CE | VE |
| Comparative Example 1 | 69.8 | 89.2 | 78.2 |
| Comparative Example 2 | 62.4 | 81.1 | 76.9 |
| Example 1 | 72.2 | 88.0 | 82.1 |
| Example 5 | 71.6 | 88.8 | 80.6 |
| Example 6 | 74.2 | 90.3 | 82.1 |
| Example 7 | 71.1 | 89.1 | 79.8 |
| Example 8 | 74.2 | 90.3 | 82.1 |

As can be seen in Table 3, it was confirmed that in the case of using the electrolytes of Examples 1 to 3, the energy efficiency and the voltage efficiency are greatly increased while maintaining the coulombic efficiency at the same level as compared with the case using the electrolytes of the comparative examples.

This can be explained by the following: as the electrolytes of the examples are used, the zinc/bromine redox flow battery can inhibit the generation of bromine gas during charging, and prevent self-discharge due to bromine, and thus the energy efficiency and the voltage efficiency are greatly increased while maintaining the coulombic efficiency at the same level.

**[Experimental Example 2: Measurement of electrical conductivity of the redox flow battery electrolyte]**

10 mL of each electrolyte prepared in the examples and comparative examples was placed in a vial and supported on the electrode. The electrical conductivity was measured with a conductivity meter CM-25R (TOADKK) at a stable point.

[Table 4] Measurement result of Experimental Example 2

| constitution | Conductivity [mS/cm] |
|---|---|
| Comparative Example 1 | 70.2 |
| Example 1 | 96.2 |
| Example 2 | 86.9 |
| Example 3 | 78.7 |
| Example 4 | 76.1 |

As shown in Table 4, it was confirmed that the electrolytes of Examples 1 to 3 have conductivity of equal to or higher than about 10 % to 30 % as compared with the electrolyte of Comparative Example 1.

**[Experimental Example 3: Measurement of vapor pressure of electrolyte at different temperatures]**

The components shown in Table 5 below were mixed to prepare 100 mL of a zinc/bromine electrolyte of SOC 40 % and SOC 60 %.

[Table 5]

| component | SOC 40 % solution | SOC 60 % solution |
|---|---|---|
| $ZnBr_2$ | 1.35 M | 0.9 M |
| $ZnCl_2$ | 0.55 M | 0.55 M |
| Bromine complexing agent* | 0.8 M | 0.8 M |
| Bromine | 0.935 M | 0.385 M |
| **Specific concentrations and components of bromine complexing agent are shown in Table 6 below. | | |

Then, the electrolyte in the state of SOC 40 % and SOC 60 % was placed in a centrifugal separator to separate an aqueous layer and an organic layer. To the resultant was added 5 mL of an organic layer in a 50 mL round flask, which was connected to a vacuum gauge (Manometer) H5063 from Hanil Lab Tec to measure the vapor pressure while increasing the temperature. At this time, the vapor pressure experiment was performed from room temperature to 60 °C, and the vapor pressure was measured at the point when the vapor pressure was stabilized from the state where the temperature was stabilized.

The measurement results are as shown in Table 6 below.

[Table 6] Measurement results of vapor pressure of electrolyte at different temperatures /unit: mmHg

| o | Bromine complexing agent | Composition | Room temperature | 40 °C | 50 °C | 55 °C | 60 °C |
|---|---|---|---|---|---|---|---|
| Comparative Example 3 | 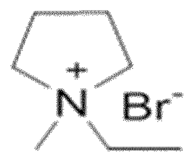 | SOC 40% | 0 | 1 | 1 | 1 | 1.5 |
| | | SOC 60% | 2 | 8 | 12 | 12 | 12 |
| Example 9 | 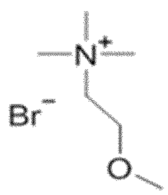 | SOC 60% | 1 | 3.5 | 4 | 5.5 | 8 |
| Example 10 | 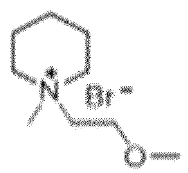 | SOC 40% | 1 | 2 | 2 | 2 | 2 |
| Example 11 | 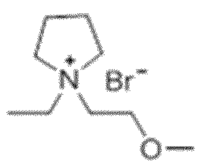 | SOC 40% | 0 | 0 | 1 | 1 | 5 |
| Example 12 | 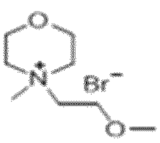 | SOC 40% | 1 | 1 | 1 | 1 | 1 |

(continued)

| o | Bromine complexing agent | Composition | Room temperature | 40 °C | 50 °C | 55 °C | 60 °C |
|---|---|---|---|---|---|---|---|
| Example 13 | 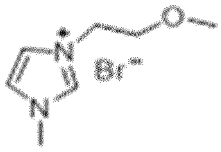 | SOC 60% | 0 | 3.5 | 4.5 | 6 | 7 |

As shown in Table 6, it was confirmed that the electrolytes of Examples 9 to 13 have a high bonding capacity with bromine gas ($Br_2$) according to the temperature rise, and thus the amount of gas generated is not so high. In particular, it was confirmed that even at a concentration of SOC 60 %, the electrolyte of Comparative Example 3 exhibits a high vapor pressure of at least about 12 mmHg at a temperature of 50 °C or higher, whereas the electrolytes of Examples 9 to 13 are excellent in high-temperature stability of the electrolyte according to the temperature rise, and thus the amount of gas generated is relatively low.

## Claims

1. A redox flow battery electrolyte comprising: an additive mixture including a zinc/bromine (Zn/Br) redox couple; a quaternary ammonium bromide containing at least one alkylene alkoxy group; and water.

2. The redox flow battery electrolyte according to claim 1,
wherein the at least one alkylene alkoxy group is a functional group in which an alkylene group having 1 to 10 carbon atoms and an alkoxy group having 1 to 10 carbon atoms are bonded,
wherein the alkylene group having 1 to 10 carbon atoms is bonded to the quaternary ammonium bromide.

3. The redox flow battery electrolyte according to claim 1,
wherein the quaternary ammonium bromide containing at least one alkylene alkoxy group includes at least one compound selected from the group consisting of the following Chemical Formulas 1 to 8:

<Chemical Formula 1>

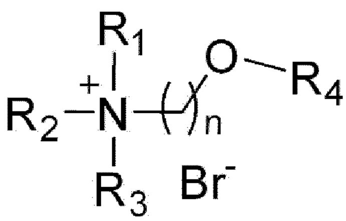

wherein, in Chemical Formula 1, $R_1$, $R_2$, $R_3$, and $R_4$ are each independently an alkyl or arylalkyl having 1 to 10 carbon atoms, and n is an integer of 1 to 5,

<Chemical Formula 2>

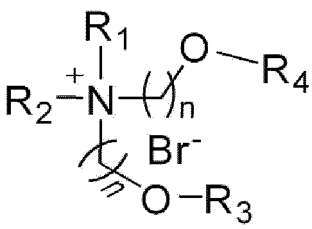

wherein, in Chemical Formula 2 $R_1$, $R_2$, $R_3$, and $R_4$ are each independently an alkyl or arylalkyl having 1 to 10 carbon atoms, and n is an integer of 1 to 5,

<Chemical Formula 3>

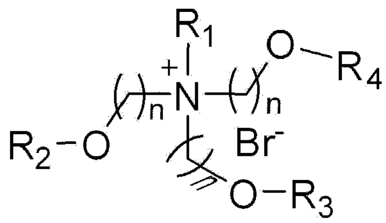

wherein, in Chemical Formula 3, $R_1$, $R_2$, $R_3$, and $R_4$ are each independently an alkyl or arylalkyl having 1 to 10 carbon atoms, and n is an integer of 1 to 5,

<Chemical Formula 4>

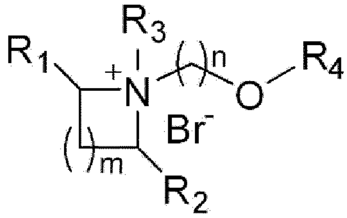

wherein, in Chemical Formula 4, $R_1$ and $R_2$ are each independently hydrogen or an alkyl or arylalkyl having 1 to 10 carbon atoms, $R_3$ and $R_4$ are each independently an alkyl or arylalkyl having 1 to 10 carbon atoms, n is an integer of 1 to 5, and m is an integer of 0 to 7,

<Chemical Formula 5>

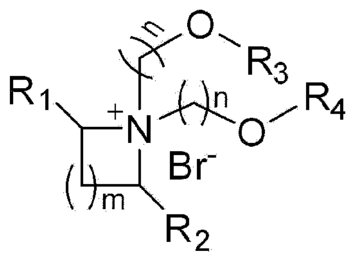

wherein, in Chemical Formula 5, $R_1$ and $R_2$ are each independently hydrogen or an alkyl or arylalkyl having 1 to 10 carbon atoms, $R_3$ and $R_4$ are each independently an alkyl or arylalkyl having 1 to 10 carbon atoms, n is an integer of 1 to 5, and m is an integer of 0 to 7,

<Chemical Formula 6>

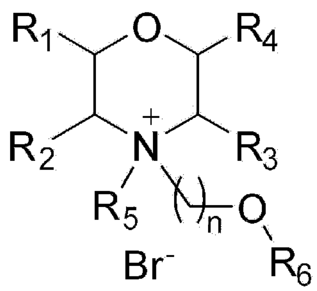

wherein, in Chemical Formula 6, $R_1$, $R_2$, $R_3$, and $R_4$ are each independently hydrogen or an alkyl or arylalkyl having 1 to 10 carbon atoms,
$R_5$ and $R_6$ are each independently an alkyl or arylalkyl having 1 to 10 carbon atoms, and n is an integer of 1 to 5,

<Chemical Formula 7>

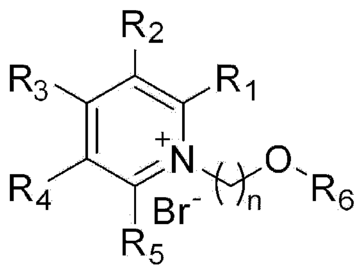

wherein, in Chemical Formula 7, $R_1$, $R_2$, $R_3$, $R_4$, and $R_5$ are each independently hydrogen or an alkyl or arylalkyl having 1 to 10 carbon atoms,
$R_6$ is an alkyl or arylalkyl having 1 to 10 carbon atoms, and n is an integer of 1 to 5,

<Chemical Formula 8>

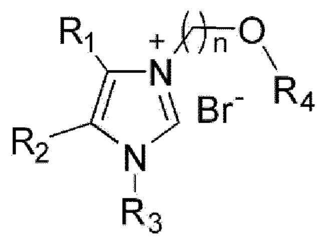

wherein, in Chemical Formula 8, $R_1$, $R_2$, and $R_3$ are each independently hydrogen or an alkyl or arylalkyl having 1 to 10 carbon atoms, each $R_4$ is an alkyl or arylalkyl having 1 to 10 carbon atoms, and n is an integer of 1 to 5.

**4.** The redox flow battery electrolyte according to claim 1,
wherein the concentration of the zinc/bromine (Zn/Br) redox couple in the redox flow battery electrolyte is 0.2 M to 10 M.

**5.** The redox flow battery electrolyte according to claim 1,
wherein the concentration of the quaternary ammonium bromide containing at least one alkylene alkoxy group in the redox flow battery electrolyte is 0.1 M to 2.0 M.

**6.** The redox flow battery electrolyte according to claim 1,
further comprising at least one complexing agent selected from the group consisting of pyridinium bromide substituted with at least one alkyl group having 1 to 10 carbon atoms, imidazolium bromide substituted with at least one alkyl

group having 1 to 10 carbon atoms, and 1-ethyl-1-methylpyrrolidinium bromide.

**7.** The redox flow battery electrolyte according to claim 1,
wherein the concentration ratio between the quaternary ammonium bromide containing at least one alkylene alkoxy group and the complexing agent in the redox flow battery electrolyte is 1:10 to 10:1.

**8.** The redox flow battery electrolyte according to claim 1,
further comprising a conductive agent for improving conductivity.

**9.** The redox flow battery electrolyte according to claim 8,
wherein the concentration of the conductive agent in the redox flow battery electrolyte is 0.1 M to 5.0 M.

**10.** The redox flow battery electrolyte according to claim 8,
wherein the conductive agent includes a potassium salt compound.

**11.** A zinc/bromine (Zn/Br) redox flow battery, comprising the electrolyte according to claim 1.

## INTERNATIONAL SEARCH REPORT

International application No.
PCT/KR2017/001144

A. CLASSIFICATION OF SUBJECT MATTER

*H01M 8/18(2006.01)i, H01M 12/08(2006.01)i, H01M 10/36(2006.01)i*

According to International Patent Classification (IPC) or to both national classification and IPC

B. FIELDS SEARCHED

Minimum documentation searched (classification system followed by classification symbols)
H01M 8/18; H01M 12/08; H01M 8/08; H01M 8/02; H01M 8/20; H01M 10/36

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: zinc, bromine, redox, flow battery, alkyl, alkoxy group, quaternary ammonium, bromide, electrolyte

C. DOCUMENTS CONSIDERED TO BE RELEVANT

| Category* | Citation of document, with indication, where appropriate, of the relevant passages | Relevant to claim No. |
|---|---|---|
| A | US 2015-0372351 A1 (BROMINE COMPOUNDS LTD.) 24 December 2015<br>See paragraphs [0023], [0025], [0027], [0029] and claim 1. | 1-11 |
| A | WO 2013-168145 A1 (BROMINE COMPOUNDS LTD.) 14 November 2013<br>See claim 1. | 1-11 |
| A | JP 09-507950 A (UNISEARCH LIMITED) 12 August 1997<br>See claims 1, 6. | 1-11 |
| A | CN 104600338 A (SHANGHAI INSTITUTE OF SPACE POWER-SOURCES)<br>06 May 2015<br>See claims 1-5. | 1-11 |
| A | CN 102484276 A (ACAL ENERGY LTD.) 30 May 2012<br>See claim 1. | 1-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 MAY 2017 (22.05.2017) | **07 JUNE 2017 (07.06.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2017/001144**

| Patent document cited in search report | Publication date | Patent family member | Publication date |
|---|---|---|---|
| US 2015-0372351 A1 | 24/12/2015 | AU 2014-213626 A1 | 06/02/2014 |
| | | CN 105026371 A | 04/11/2015 |
| | | EP 2953930 A1 | 16/12/2015 |
| | | EP 2953930 B1 | 07/12/2016 |
| | | JP 2016-510488 A | 07/04/2016 |
| | | WO 2014-122641 A1 | 14/08/2014 |
| WO 2013-168145 A1 | 14/11/2013 | AU 2014-257586 A1 | 25/09/2014 |
| | | CN 104350641 A | 11/02/2015 |
| | | EP 2847822 A1 | 18/03/2015 |
| | | US 2015-0155584 A1 | 04/06/2015 |
| JP 09-507950 A | 12/08/1997 | AU 696452 B2 | 10/09/1998 |
| | | EP 0729648 A1 | 04/09/1996 |
| | | EP 0729648 B1 | 02/04/2003 |
| | | US 6143443 A | 07/11/2000 |
| | | US 6562514 B1 | 13/05/2003 |
| | | WO 95-12219 A1 | 04/05/1995 |
| CN 104600338 A | 06/05/2015 | NONE | |
| CN 102484276 A | 30/05/2012 | BR 112012002298 A2 | 14/06/2016 |
| | | EP 2462650 A1 | 13/06/2012 |
| | | EP 2462650 B1 | 12/03/2014 |
| | | JP 2013-501337 A | 10/01/2013 |
| | | KR 10-2012-0059528 A | 08/06/2012 |
| | | US 2012-0231363 A1 | 13/09/2012 |
| | | US 9209476 B2 | 08/12/2015 |
| | | WO 2011-015875 A1 | 10/02/2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160013064
- WO 2013168145 A